# FASCICULE DE BREVET EUROPEEN

(11) **EP 1 867 589 B1**
(45) Date de publication et mention de la délivrance du brevet: **17.12.2008**
(21) Numéro de dépôt: 07110186.9
(22) Date de dépôt: 13.06.2007
(51) Int. Cl.: B65G 47/96

(54) **Dispositif support pour le calibrage pondéral d'un objet tel qu'un fruit ou légume**
Haltevorrichtung zur Gewichtseichung von Gegenständen wie Obst und Gemüse
Holding device for the calibration by weight of articles such as fruit and vegetables

(30) Priorité: 15.06.2006 FR 0605326
(43) Date de publication de la demande: 19.12.2007
(73) Titulaire: Caustier France, 66000 Perpignan (FR)
(72) Inventeur: Caustier, Claude Caustier France, 66000 Perpignan (FR)
(74) Mandataire: Domange, Maxime

(56) Documents cités:
- WO-A-20/05037453
- AU-B2- 701 354

## Description

La présente invention concerne un dispositif support d'un objet tel qu'un fruit ou un légume pour son calibrage pondéral, apte à être transporté par un convoyeur sans fin dans une direction longitudinale, en particulier une chaîne sans fin, et apte à coopérer avec un dispositif de pesée dans une zone de pesée le long dudit convoyeur, et au moins un dispositif d'éjection.

La présente invention concerne également un dispositif de calibrage pondéral pour objets tels que fruits ou légumes, c'est-à-dire un dispositif destiné à trier lesdits objets selon leur poids.

Ces dispositifs de calibrage pondéral comprennent une pluralité de godets aptes à contenir un unique dit objet, les godets étant montés et transportés sur un premier convoyeur à chaînes sans fin.

Au cours de leur transport, les godets sont amenés dans une zone de pesage dans laquelle ils coopèrent avec un dispositif de pesage pour effectuer la pesée dudit objet. Et, en fonction du poids dudit objet, celui-ci est ultérieurement déposé en dehors dudit godet par basculement latéral dudit godet lorsque ledit godet coopère avec un dispositif d'éjection disposé dans une zone d'éjection pour recueillir lesdits objets dans une aire de réception ou sur un second convoyeur du type tapis roulant en dessous dudit premier convoyeur, les différentes aires de réception correspondant à différents calibres.

Il y a donc en général une pluralité de dispositifs d'éjection, en regard respectivement d'une pluralité de zones de déversement desdits objets de calibres différents.

De façon connue, lesdits dispositif de pesée et dispositifs d'éjection sont reliés entre eux par des moyens électroniques permettant la commande des dispositifs d'éjection en fonction des données communiquées par le dispositif de pesée.

Les dispositifs d'éjection comprennent en général des éléments mobiles actionnés par des électro-aimants, par un système électronique relié au dispositif de pesée.

Les dispositifs de pesée comprennent de façon connue au moins une plaque ou plan de pesée connectée à un capteur, apte à coopérer avec au moins un élément d'appui dudit godet.

On connaît dans l'état de la technique de nombreux dispositifs de calibrage et godets du type mentionné ci-dessus.

On connaît des godets qui permettent de déverser les objets après pesage, d'un côté ou de l'autre dudit premier convoyeur au choix, de manière à diminuer l'encombrement général ou mieux gérer l'encombrement général d'un dispositif de calibrage en prévoyant notamment des aires de déversement desdits objets des deux côtés du convoyeur de godets.

Dans EP 0675768, on décrit un godet comprenant :
- un réceptacle apte à contenir un dit objet, notamment un fruit ou légume de forme sensiblement sphérique, et
- un étrier apte à être fixé sur un dit convoyeur, notamment une chaîne sans fin, et
- des moyens de liaison entre ledit réceptacle et ledit étrier.

Les moyens de liaison entre ledit réceptacle et ledit étrier sont constitués d'une pièce métallique en forme de U qui permet de former 2 axes de rotation du réceptacle transversalement à la direction longitudinale de transport du godet.

Un premier axe de rotation est situé sur l'arrière du réceptacle ,il est matérialisé par les extrémités libres des branches du U qui sont coudées à angle droit vers l'extérieur et rentrent dans des ouvertures correspondantes latérales en sous face du réceptacle. Le réceptacle et ledit premier axe de rotation matérialisé sont solidaires en translation et ne peuvent être animés que d'un mouvement relatif de rotation par rapport au dit premier axe. Ainsi, lorsque le réceptacle est soulevé en position sensiblement horizontale au niveau de la zone de pesée, il se trouve en sustentation retenu simplement par ledit premier axe de rotation mais libre en rotation par rapport à ce dit premier axe de rotation, la partie avant du réceptacle ne reposant plus sur celui-ci.

Un deuxième axe de rotation est situé sur l'avant du réceptacle,il est matérialisé par la partie transversale du U. Ce deuxième axe de rotation matérialisé traverse un canal transversal dans a partie supérieure de l'étrier. La forme dudit canal et d'autres moyens de guidage permettent un glissement latéral du réceptacle par coulissement et pivotement simultané de ladite partie transversale du U formant ledit deuxième axe de rotation. La partie avant du réceptacle repose sur l'étrier et coopère avec celui-ci par emboîtement de forme complémentaire en sous face du réceptacle et dudit étrier à deux niveaux, ce qui stabilise le réceptacle en position horizontale avant et après la zone de pesage :
- un premier niveau au sommet de l'étrier au-dessus de ladite partie transversale du U lorsque celle-ci est en position horizontale, et
- un deuxième niveau par une béquille en sous face du réceptacle sur l'avant de celui-ci, laquelle béquille repose sur un jambage de l'étrier en dessous de ladite partie transversale du U lorsque celle-ci est en position horizontale.

Un premier inconvénient du dispositif décrit dans EP 675768 est que, après la zone de pesée, lorsque le réceptacle est à nouveau en position basse stabilisé horizontalement par emboîtement avec des formes complémentaires de l'étrier et du réceptacle , il faut pour provoquer le basculement par glissement latéral du réceptacle dans la zone d'éjection, soulever le réceptacle relativement brusquement pour tout à la fois le désemboîter de l'étrier avant de pouvoir provoquer un coulissement latéral en translation et pivotement simultané de la branche transversale du U matérialisant ledit deuxième axe de rotation . Pour ce faire, il faut taper relativement brusquement en sous face du réceptacle, ce qui a pour inconvénient de provoquer un catapultage de l'objet vers le haut au-dessus du réceptacle , dommageable à la qualité du fruit . En fait, le glissement latéral du réceptacle revendiqué dans le brevet EP 675768 ne vient qu'atténuer le phénomène de catapultage de l'objet transporté sans pouvoir le supprimer complètement. Ce catapultage de l'objet est dommageable à la qualité du fruit.

D'autre part, les moyens structurels nécessaires pour permettre le glissement latéral du réceptacle sont relativement compliqués et coûteux à réaliser et mettre en oeuvre .Ils requièrent notamment la mise en oeuvre de moyens de liaison résistant réalisés en métal.

Un autre inconvénient de ce dispositif est que le réceptacle dont le centre de gravité se trouve entre les deux axes de rotation matérialisés, est en déplacement sous l'effet d'une poussée qui s'applique à l'arrière du réceptacle au niveau des points d'accroche latérale dudit premier axe de rotation matérialisé lorsque ledit réceptacle se trouve soulevé dans la zone de pesée. Il en résulte que la transmission des vibrations du convoyeur peut accentuer le sautillement du fruit dans le réceptacle par opposition à une situation mécanique où le réceptacle en déplacement serait déplacé sous l'effet d'une traction qui s'appliquerait à l'avant du réceptacle.

Ceci a pour effet d'affecter la fiabilité du réceptacle et de l'objet à peser dans la zone de pesée, et donc d'affecter négativement la précision de la pesée.

Dans JP 57-19222, on décrit un godet comprenant un réceptacle apte à basculer latéralement des deux côtés par rotation sous l'effet de deux biellettes latérales disposées de part et d'autre dudit réceptacle. Le mouvement des biellettes, outre la mise en oeuvre de moyens mécaniques relativement précis et coûteux à réaliser, s'accompagne d'une composante verticale du mouvement qui provoque un catapultage de l'objet au moment de son déversement en dehors du réceptacle car l'axe de rotation du réceptacle n'est pas dans l'axe du centre de gravité ce qui induit un phénomène de bras de levier (et donc de catapultage).

Le but de la présente invention est de fournir des godets qui permettent d'améliorer la stabilité du godet pendant la pesée et donc de fournir une meilleure précision de pesée.

Un autre but de l'invention est de fournir un godet dont le réceptacle puisse basculer latéralement d'un côté ou de l'autre au moment de l'éjection après pesée sans phénomène de catapultage de l'objet au moment du basculement.

Un autre but de la présente invention est de fournir un godet qui soit simple et peu coûteux à fabriquer, tout en étant fiable dans son fonctionnement.

Pour ce faire, la présente invention fournit un dispositif support d'un objet tel qu'un fruit ou un légume pour son calibrage pondéral, apte à être transporté par un convoyeur sans fin dans une direction longitudinale (XX'), en particulier une chaîne sans fin, et apte à coopérer avec un dispositif de pesée dans une zone de pesée le long dudit convoyeur, et au moins un dispositif d'éjection , ledit dispositif de support comprenant :
- un réceptacle apte à contenir un dit objet , et
- un étrier apte à être fixé à sa base sur ledit convoyeur sans fin , et
- des moyens de liaison entre ledit réceptacle et ledit étrier ,
   ■ le dit réceptacle étant relié et articulé en rotation par rapport aux dits moyens de liaison par des éléments d' articulation en rotation autour d'un premier axe de rotation,
   ■ les dits moyens de liaison étant relié et articulé en rotation par rapport audit étrier par des éléments d'articulation en rotation autour d'un deuxième axe de rotation ;
   ■ lesdits premier et deuxième axes de rotation s'étendant dans une direction transversale,
   ■ de sorte que les rotations conjuguées dudit réceptacle et desdits moyens de liaison autour desdits premier et deuxième axes de rotation permettent un soulèvement dudit réceptacle en position sensiblement horizontale dans ladite zone de pesée.

Selon l'invention le dispositif est caractérisé en ce que :
- lesdits moyens de liaison consistent en un bras de liaison, comprenant deux premier et deuxième éléments de liaison coaxiaux selon un axe longitudinal commun constituant un troisième axe de rotation,
- ledit premier élément de liaison étant solidaire desdits éléments d'articulation en rotation du réceptacle autour dudit premier axe de rotation, et apte à être entraîné en rotation autour du dit troisième axe de rotation,
- le dit deuxième élément de liaison étant solidaire des dits éléments d'articulation en rotation du bras de liaison autour du dit deuxième axe de rotation, et
- les éléments d'articulations en rotation autour des dits premier et deuxième axe de rotation étant fixes en translation latérale dans une dite direction transversale.

Ainsi lesdits premier et deuxième éléments de liaison constituant les moyens de liaison coopèrent en rotation l'un par rapport à l'autre autour du dit troisième axe de rotation pour provoquer le basculement latéral du dit réceptacle apte à permettre un déversement latéral du dit objet d'un coté ou de l'autre du dit convoyeur dans la dite zone d'éjection par poussée verticale vers le haut dessous le dit réceptacle sur un de ses cotés sous l'effet dudit dispositif d'éjection.

Plus particulièrement, on comprend que le basculement latéral du réceptacle se fait uniquement par rotation dudit réceptacle autour d'un troisième axe de rotation lequel troisième axe de rotation ne peut se mouvoir qu'en rotation autour des dits premier et deuxième axes de rotation,les éléments d'articulation en rotation du bras de liaison autour du dit deuxième axe de rotation étant fixes en rotation autour dudit troisième axe de rotation, et les dits éléments d'articulation en rotation autour du dit troisième axe de rotation étant également fixes en translation latérale. On comprend donc que ce basculement latéral se fait sans composante de soulèvement par translation verticale et sans translation latérale du centre de gravité dudit réceptacle.

On entend ici par « direction transversale » une direction horizontale perpendiculaire à la direction longitudinale axiale XX' de transport.

De même, on entend par « position horizontale dudit réceptacle » le fait que le bord supérieur périphérique dudit réceptacle est tangent à un plan horizontal.

Dans un mode de réalisation préféré,le dispositif support selon l'invention est caractérisé en ce que :
- Le dit premier axe de rotation est situé en avant du centre de gravité (2-8) dudit réceptacle, et le dit deuxième axe de rotation est situé en avant dudit premier axe de rotation, et
- les éléments d'articulations en rotation dudit réceptacle autour dudit premier axe de rotation sont situés du côté de l'extrémité arrière du dit premier élément de liaison du bras de liaison, les dits éléments d'articulation en rotation autour du dit deuxième axe de rotation étant situés du coté de l'extrémité avant du dit deuxième élément de liaison du bras de liaison, et
- ledit réceptacle comprend une béquille situé à l'arrière dudit centre de gravité du réceptacle, apte à reposer sur un premier élément support, indépendant dudit étrier, la dite béquille étant apte à maintenir par gravité ledit réceptacle en position basse sensiblement horizontale lorsque ledit réceptacle transporte un dit objet et ne coopère pas avec lesdits dispositif de pesée et dispositifs d'éjection.

On comprend que « avant » et « arrière » sont définis par rapport au sens d'avancement du godet dans la direction longitudinale de transport.

On comprend que les rotations conjuguées autour desdits premier et deuxième axes de rotation permettent un soulèvement en translation de la dite béquille par rapport audit élément support en même temps que dudit réceptacle par rapport à l'étrier, de sorte que ledit réceptacle est apte à être maintenu en sustentation par le seul dit bras de liaison au niveau du dit premier axe de rotation lorsque ledit réceptacle coopère avec un dispositif de pesée dans la zone de pesée. D'autre part, le réceptacle dont le centre de gravité est situé à l'arrière du bras de liaison est déplacé en traction dans la zone de pesée ce qui améliore sa stabilité et donc la précision de la pesée

Le fait que ledit premier élément support soit indépendant de l'étrier, d'une part et situé à l'arrière du centre de gravité, contribue également à la stabilisation du réceptacle et de l'objet qu'il contient pendant son transport.

Plus particulièrement, la dite béquille présente une face plate inférieure apte à reposer sur un dit élément support consistant en un maillon de ladite chaîne.

Ainsi la dite béquille n'a pas besoin d'être soulevée dans la zone d'éjection en préalable au pivotement du bras de liaison pour permettre le basculement latéral du réceptacle.

Avantageusement,le dispositif support selon l'invention comprend des moyens de blocage angulaire contrôlé aptes à :
- maintenir ledit réceptacle en position sensiblement horizontale en rotation autour du dit troisième axe de rotation lorsque celui-ci est surélevé dans ladite zone de pesée et
- libérer la rotation du dit réceptacle autour du dit troisième axe de rotation lorsque celui-ci est soumis à une poussée verticale vers le haut dessous un de ses cotés par l'effet d'un dit dispositif d'éjection.

On entend ici par «sensiblement horizontale » que ledit réceptacle peut connaître un léger jeu de pivotement latéral par rapport à un axe correspondant à ladite direction longitudinale de transport et selon la présente invention au dit troisième axe de rotation, léger pivotement qui doit permettre d'adapter ledit réceptacle en position d'appui contre le dispositif de pesée dans la zone de pesage, même lorsque les deux plaques de pesée situées de part et d'autre de la chaîne en dessous dudit réceptacle ne sont pas parfaitement dans un même plan horizontal. En pratique, on utilise un débattement angulaire inférieur ou égal à 5° par rapport à un plan horizontal passant par ledit axe longitudinal dudit bras de liaison.

Dans un mode de réalisation,le dispositif support selon l'invention est caractérisé en ce que :
- lesdits éléments d'articulations en rotation dudit réceptacle autour dudit premier axe de rotation sont matérialisés par des formes complémentaires dudit premier élément de liaison du côté de son extrémité arrière, et dudit réceptacle en sous face de celui-ci, et
- lesdits éléments d'articulation en rotation autour dudit deuxième axe de rotation sont matérialisés par des formes complémentaires dudit deuxième élément de liaison du bras de liaison du côté de son extrémité avant, et dudit étrier dans sa partie supérieure .

De préférence encore, le dispositif selon l'invention comprend des deuxièmes éléments de butée situés au niveau desdits éléments d'articulation autour des premier et respectivement deuxième axes de rotation, lesdits deuxièmes éléments de butée étant aptes à limiter lesdites rotations d'un angle inférieur ou égal à 10°, de préférence 5° par rapport à l'horizontale desdits bras de liaison et respectivement dit réceptacle.

Cette caractéristique permet essentiellement de maintenir ledit réceptacle dans une position sensiblement proche des 10° par rapport à l'horizontale lorsque celui-ci est en position renversée sous ledit étrier lors de son transport de retour par ladite chaîne après éjection dudit objet, réduisant ainsi l'encombrement de l'installation, et réduisant également les mouvements angulaires lors du rétablissement des réceptacles en position supérieure au-dessus dudit étrier pour recevoir un prochain objet à calibrer.

On comprend que lesdits deuxièmes éléments de butée peuvent résulter desdites formes complémentaires des parties desdits bras de liaison, dit réceptacle et dit étrier matérialisant les éléments d'articulation en rotation autour des dits premier et deuxième axes de rotation.

Dans un mode préféré de réalisation, ledit premier élément de liaison dudit bras de liaison est constitué par un fourreau comportant une cavité tubulaire mobile en rotation autour dudit troisième axe de rotation, dans laquelle vient s'emboîter une partie mâle cylindrique coaxiale dudit deuxième élément de liaison fixe en rotation par rapport au dit troisième axe de rotation.

On comprend donc que :
- la dite partie mâle cylindrique étant solidaire dudit troisième axe de rotation et des éléments d'articulation en rotation autour dudit deuxième axe de rotation, est fixe en rotation autour des deux troisième et premier axes de rotation, mais mobile en rotation autour du seul deuxième axe de rotation, tandis que
- le dit fourreau étant solidaire des éléments d'articulation autour desdits premier et troisième axe de rotation, est mobile en rotation autour des deux deuxième et troisième axes de rotation et fixe en rotation autour dudit premier axe de rotation.

Dans un mode de réalisation avantageux, lesdits moyens de blocage angulaire contrôlé comprennent :
■ un premier élément de butée rigide, solidaire dudit premier élément de liaison, et
■ un premier élément de retenue déformable et solidaire dudit deuxième élément de liaison,
■ ledit premier élément de butée étant apte à déformer ledit premier élément de retenue lorsque ledit réceptacle coopère avec un dit dispositif d'éjection pour basculer latéralement de manière à déverser ledit objet qu'il contient, ledit premier élément de retenue étant apte à retenir ledit premier élément de butée en autorisant un léger débattement angulaire , de préférence de ± 5°,de manière à maintenir ledit réceptacle en position sensiblement horizontale lorsque ledit réceptacle ne coopère pas avec ledit dispositif d'éjection.

Plus particulièrement, ledit premier élément de retenue est constitué par une languette déformable comprenant en sous face une empreinte en creux, et ledit premier élément de butée est constitué par une partie en saillie formant une bosse à la surface externe dudit premier élément de liaison, et
- ladite bosse est apte à être maintenue à l'intérieur dudit creux autorisant un léger débattement angulaire de préférence inférieur ou égal à 5° par rapport à un plan axial vertical, lorsque ledit réceptacle ne coopère pas avec un dit dispositif d'éjection,
- la déformation de ladite languette étant telle que la dite bosse est apte à être complètement dégagée dudit creux pour permettre un basculement latéral dudit réceptacle autorisant le déversement dudit objet lorsque celui-ci coopère avec un dit dispositif d'éjection.

Comme mentionné précédemment, cette autorisation de ce débattement angulaire contrôlé autour d'une position horizontale permet d'assurer la bonne pesée sur tous les éléments d'appui en sous face dudit réceptacle en appui simultané sur au moins deux plaques de pesée du dispositif de pesée de part et d'autre de ladite chaîne même lorsque lesdites plaques ne sont pas exactement dans un même plan horizontal. Ce débattement angulaire peut être obtenu en prévoyant un rayon de courbure convexe de ladite bosse inférieur au rayon de courbure concave d'un dit creux de forme cylindrique.

Avantageusement, ledit réceptacle comprend au moins quatre éléments d'appui comprenant deux éléments d'appui avant droit et respectivement avant gauche et deux éléments d'appui arrière droit et respectivement arrière gauche, lesdits éléments d'appui étant disposés symétriquement par rapport à un plan axial vertical dudit réceptacle dans ladite direction longitudinale, lesdits éléments d'appui étant tangents à leur base avec un même plan d'appui, et le point d'intersection des droites joignant lesdits éléments d'appui avant droit et avant gauche aux éléments d'appui arrière gauche et respectivement arrière droit est situé sur une même droite perpendiculaire à un même plan d'appui, ladite droite perpendiculaire passant par ledit centre de gravité du réceptacle.

De préférence, lesdits éléments d'appui avant sont décalés latéralement par rapport auxdits éléments d'appui arrière, c'est-à-dire en d'autres termes que la distance entre les 2 éléments d'appui avant est différente de la distance entre 2 éléments d'appui arrière, de préférence encore lesdits éléments d'appui avant sont plus proches l'un de l'autre que lesdits éléments d'appui arrière ne le sont.

Lesdits éléments d'appui présentent des bases situées dessous ledit réceptacle dans un même plan d'appui aptes à coopérer avec au moins deux plaques de pesée du dit dispositif de pesage sur lesquelles ils peuvent reposer simultanément, et de préférence avec des éléments en forme de rampe latérale disposés de part et d'autre de ladite chaîne dans ladite zone de pesage, pour permettre le soulèvement en translation dudit réceptacle pendant ladite pesée dudit objet sur lesdites plaques de pesée.

Lesdits éléments d'appui décalés latéralement peuvent coopérer avec 2 plaques de pesée disposées symétriquement par rapport à un plan axial vertical du réceptacle dans ladite direction longitudinale. Les plaques de pesée ont avantageusement une forme de chicane ou « s »avec une zone avant des plaques de pesée décalées latéralement par rapport à une zone arrière des plaques de pesée, notamment des zones avant rectangulaires des plaques de pesée étant plus proches de l'axe longitudinal XX' que desdites zones arrière rectangulaires, de la même manière que lesdits éléments d'appui avant sont décalés latéralement et plus proche dudit axe longitudinal XX' par rapport aux dits éléments d'appui arrière, le dispositif de pesée ou peson se trouvant en position sensiblement centrale sous ladite plaque en forme de chicane ou « s », dans une zone de chevauchement des deux dites zones avant et arrière rectangulaires.

Une pesée s'effectue valablement lorsque les 4 éléments d'appui avant et arrière reposent simultanément sur les 2 plaques de pesée. Et, la fiabilité d'une pesée dépend de la duré d'une pesée, c'est-à-dire de la durée pendant laquelle les 4 éléments d'appui avant et arrière d'un réceptacle donné peuvent reposer simultanément sur les 2 plaques de pesée sans que les éléments d'appui avant du réceptacle suivant et/ou éléments d'appui arrière du réceptacle précédent ne reposent sur les mêmes plaques de pesée que celles coopérant avec ledit réceptacle donné.

L'écartement latéral des éléments d'appui avant et dites zones avant des plaques de pesée par rapport aux éléments d'appui arrière et respectivement dites zones arrière des plaques de pesée, permet :
- d'espacer longitudinalement davantage les éléments d'appui avant par rapport aux éléments d'appui arrière, et de
- mettre en oeuvre des plaques de pesée plus longues qu'un dit réceptacle donné et
- ainsi, de faire coopérer simultanément les 4 éléments d'appui avec lesdites plaques de pesée sans que les éléments d'appui avant du réceptacle suivant et/ou éléments d'appui arrière du réceptacle précédent ne reposent sur les mêmes plaques de pesée que celles coopérant avec ledit réceptacle donné, pendant un temps plus long que si les éléments d'appui avant étaient disposés linéairement par rapport aux éléments d'appui arrière et les plaques de pesée constituées de simples rectangles.

Il résulte de cet espacement longitudinal accru entre lesdits éléments d'appui arrière et lesdits éléments d'appui avant une meilleure stabilité du réceptacle lors de son passage sur les plaques de pesée et une plus longue durée de pesée et donc une plus grande fiabilité de la pesée que si les éléments d'appui avant étaient alignés par rapport aux éléments d'appui arrière.

Plus particulièrement, ledit réceptacle comprend en sous face et latéralement des deuxièmes éléments d'appui ou patins d'éjection aptes à coopérer avec un élément mobile dudit dispositif d'éjection, ledit élément mobile étant apte à exercer une poussée verticale sur ledit troisième élément d'appui au dit patin d'éjection, lesdits deuxièmes éléments d'appui étant situés en avant dudit premier axe de rotation.

Cette disposition desdits deuxièmes éléments d'appui ou patins d'éjection est avantageuse car elle permet de faire agir le dispositif d'éjection plus longtemps et surtout d'entraîner en rotation ledit premier axe de rotation autour dudit axe longitudinal dudit troisième axe de rotation consistant dans l'axe du bras de liaison.

Ceci permet en outre de soulager l'effort mécanique au niveau de l'articulation dudit bras de liaison et dudit réceptacle au niveau dudit premier axe de rotation Avantageusement encore, lesdits réceptacles, dit étrier et dits moyens de liaison sont entièrement réalisés en matière plastique.

La présente invention a également pour objet un dispositif de calibrage pondéral d'un objet tel qu'un fruit ou un légume, comprenant une pluralité de dispositifs supports selon l'invention, fixés à un dit convoyeur à chaîne sans fin, et au moins un dispositif de pesée dans une zone de pesée et au moins un dispositif d'éjection dans une zone d'éjection d'un dit objet hors dudit réceptacle, après basculement latéral dudit réceptacle.

Plus particulièrement, ledit dispositif de pesée comprend :
- au moins une plaque de pesée de chaque côté dudit convoyeur, lesdites plaques étant disposées de telle sorte qu'au moins quatre éléments d'appui avant et arrière d'un dit réceptacle, reposent simultanément sur respectivement les quatre zones avant et arrière correspondantes desdites plaques de pesée sans que les éléments d'appui des réceptacles précédent et suivant ne reposent sur les mêmes dites plaques de pesée, et
- des rampes conduisant aux dites plaques de pesée, de part et d'autre de ladite chaîne dans la zone de pesée, les dites rampes étant initialement inclinées puis horizontales de sorte que ledit réceptacle glissant en appui sur les dites rampes soit soulevé en translation pour être maintenu en sustentation par le seul dit bras de liaison en position sensiblement horizontale lorsqu'il repose sur lesdites plaques de pesée.

De préférence, chaque plaque de pesée présente une forme en chicane avec une zone avant décalée latéralement par rapport à une zone arrière, et chaque réceptacle comprend au moins 2 éléments d'appui avant pareillement décalés latéralement par rapport à au moins 2 éléments d'appui arrière, lesdites plaques de pesée étant plus longues qu'un dit réceptacle et disposées de telle sorte que les au moins quatre dits éléments d'appui avant et arrière d'un dit réceptacle peuvent reposer simultanément sur respectivement les quatre zones avant et arrière correspondantes desdites plaques de pesée sans que les éléments d'appui avant et arrière des réceptacles précédent et suivant ne reposent sur les mêmes dites plaques de pesée.

De façon connue, le dispositif de calibrage comprend une pluralité de dits dispositifs d'éjection disposés dans une dite zone d'éjection et une pluralité d'aires de réception desdits objets après éjection, lesdites aires de réception étant disposées des deux côtés dudit convoyeur, dessous celui-ci, lesdits dispositifs de support étant aptes à permettre un basculement latéral dudit réceptacle au choix sur l'un ou l'autre des côtés dudit convoyeur selon la position dudit dispositif d'éjection.

Plus particulièrement encore, ledit dispositif d'éjection comprend un élément mobile apte à pivoter de bas en haut, commandé par un électro-aimant en fonction des informations communiquées par le dispositif de pesée, pour venir exercer une poussée verticale sur ledit troisième élément ou patins d'appui et provoquer la rotation dudit réceptacle autour du dit troisième axe de rotation et déversement dudit objet dans une zone de réception.

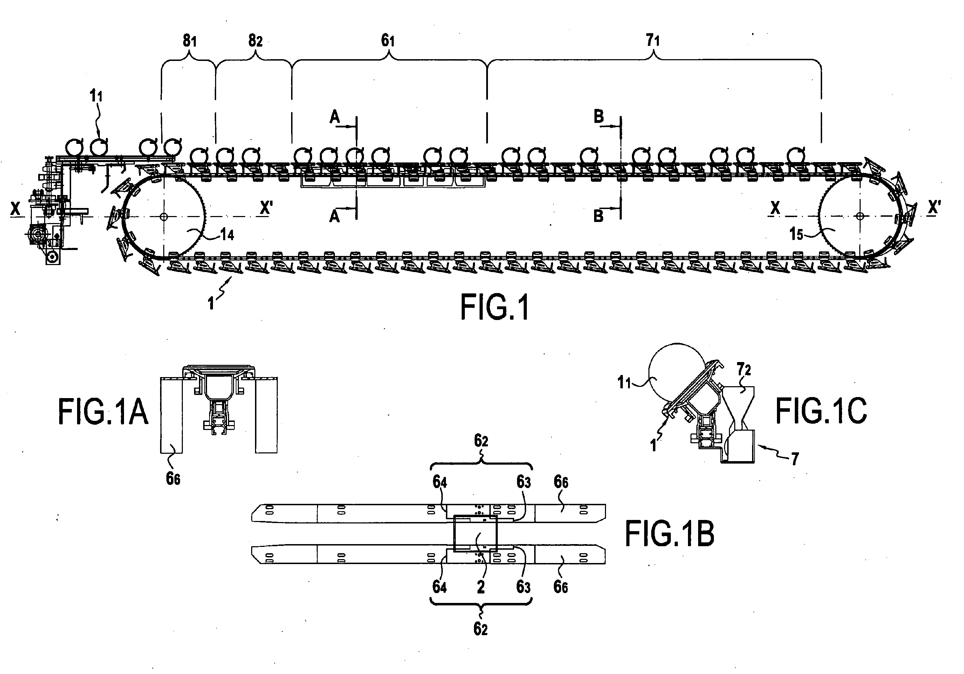

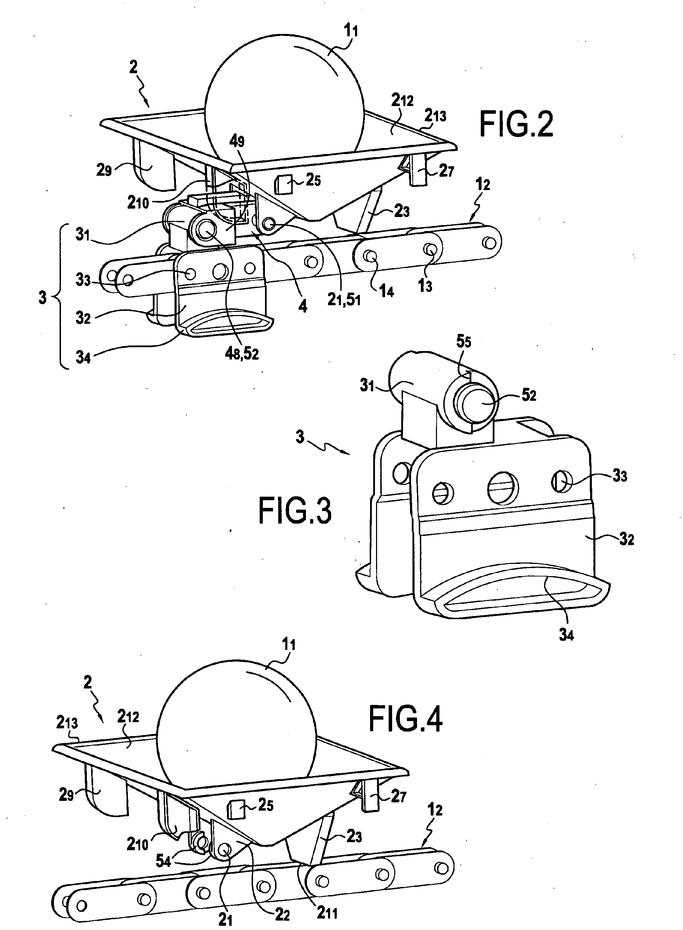

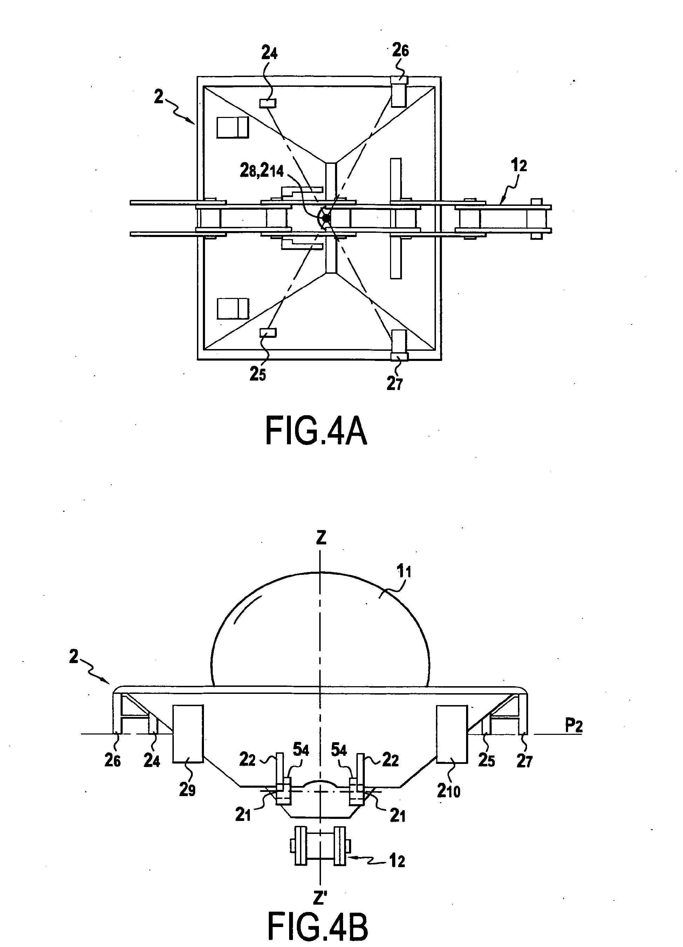

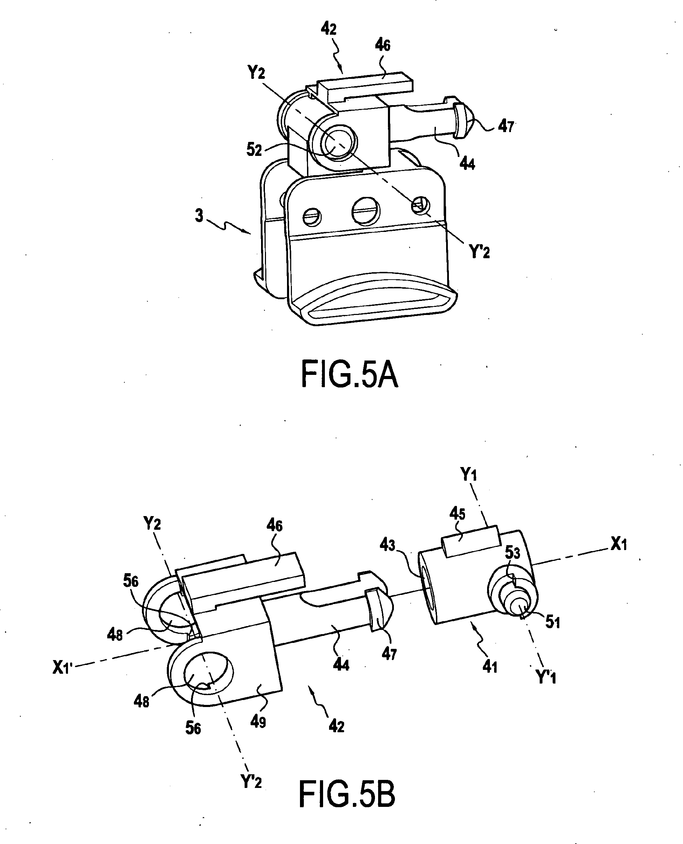

D'autres caractéristiques et avantages de la présente invention apparaîtront à la lumière de la description qui va suivre faite en référence aux figures 1 à 9 dans lesquelles :
- La figure 1 représente une vue d'ensemble de côté d'un dispositif de calibrage pondéral comprenant des dispositifs supports ou godets 1 selon l'invention.
- La figure 1A est une vue en coupe selon A-A de la figure 1 montrant le réceptacle 2 reposant sur des rampes 6₆ dans la zone de pesée 6₁,
- La figure 1B représente une vue de dessus dans la zone de pesée 6₁ avec le réceptacle reposant sur les deux rampes latérales 6₆ permettant de surélever le réceptacle en position sensiblement horizontale pendant la pesée.
- La figure 1C représente une coupe selon B-B de la figure 1, montrant le pivotement en rotation du réceptacle 2 sous l'effet du dispositif d'éjection 7 dans la zone d'éjection 7₁.
- La figure 2 représente un godet selon l'invention, contenant un fruit sphérique 1 engagé sur la chaîne 1₂ d'un convoyeur sans fin.
- La figure 3 est une vue d'un étrier 3 du godet selon l'invention.
- La figure 4 représente le réceptacle 2 en position d'appui sur la chaîne 1₂.
- Les figures 4A et 4B sont des vues de face (Fig.4B) et de dessous (4A) du réceptacle d'un godet selon l'invention, montrant les patins d'éjection 2₉, 2₁₀ et plot d'appui de pesée 2₄, 2₇.
- La figure 5A montre un élément de liaison 4₂ sur un dit étrier 3 d'un godet selon l'invention.
- Les figures 5B, 5C représentent les deux éléments de liaison 4₁ et 4₂ détachés (figure 5B) et engagés coaxialement (figure 5C).
- Les figures 6A à 6C représentent le débattement angulaire du bras de liaison autour dudit premier axe de rotation entre deux positions limites (figures 6B et 6C) autour d'une position centrale (figure 6A).
- Les figures 7A et 7B montrent le pivotement latéral du réceptacle 2 sous l'effet du dispositif d'éjection 7 (fig. 7A) et la libération du bras de liaison 4 au niveau de sa languette 4₆/bosse en saillie 4₅ vue de face (fig. 7B). La figure 7B est une coupe selon VIIB de la figure 7A.
- La figure 8 représente une vue du godet en position de retour incliné vers le bas par rapport à l'horizontale de 10°.
- Les figures 9A et 9B sont des schémas en vue de coté d'une godet selon l'invention en position basse( fig.9B) avant et après pesée et en position surélévée (fig.9A) dans la zone de pesée.
- Les figures 10A et 10B sont des schémas en vue de dessus des godets et plaques de pesée.

Un dispositif de calibrage pondéral d'objet 1₁ selon l'invention comprend une pluralité de dispositifs supports 1 ou godets 1 fixés sur une chaîne sans fin 1₂ se déplaçant dans une direction longitudinale XX' avec deux roues de rotation à chaque extrémité 1₄, 1₅ permettant le retour des godets vides. Les objets 1₁ sont déposés dans les réceptacles 2 des godets 1 dans une zone de dépose 8₁. On laisse les objets 1₁ se stabiliser dans les godets dans une zone de stabilisation 8₂ avant que les réceptacles 2 coopèrent avec des rampes 6₆ de part et d'autre de la chaîne. Ces rampes 6₆ comprennent une partie initiale inclinée en pente montante pour soulever les godets, puis une partie médiane horizontale dans laquelle sont placées des plaques de pesée 6₂-6₅, avant de présenter une partie terminale inclinée en pente descendante pour permettre la stabilisation du réceptacle en partie basse sensiblement horizontale avant éjection de l'objet. Les réceptacles 2 comprennent des plots d'appui 2₄-2₇ qui glissent sur lesdites rampes 6₆ pour permettre de soulever le réceptacle 2 en le maintenant en position horizontale comme il sera vu ci-après, jusqu'à amener le réceptacle en sustentation dans la zone de pesage 6₁ avant que celui-ci soit redescendu pour arriver dans une zone d'éjection 7₁ après pesée.

Un godet 1 selon l'invention comprend un réceptacle 2 comprenant des parois latérales 2₁₂ délimitant des bords périphériques 2₁₃ d'une ouverture apte à recevoir l'objet 1₁. Les quatre parois latérales 2₁₂ forment un prisme renversé dont la base ouverte délimite ladite ouverture du réceptacle 2. La paroi latérale arrière transversale du réceptacle 2 comprend en sous face une béquille 2₃ comprenant une base plate 2₁₁ apte à reposer sur un maillon 1₃ de la chaîne 1₂ lorsque le godet est en position basse avant et après la zone de pesée 6₁,

En sous face des parois latérales longitudinales 2₁₂ du réceptacle, sont disposés des plots constituant des éléments d'appui 2₄-2₇, les éléments d'appui avant droit 2₄ et avant gauche 2₅ étant en retrait latéralement, c'est-à-dire dans ladite direction transversale,par rapport aux éléments d'appui arrière droit 2₆ et arrière gauche 2₇. Ces éléments d'appui 2₄-2₇ ont leur base dans un plan d'appui P2 parallèle aux bords tangents supérieurs périphériques 2₃ du godet destiné à se trouver en position sensiblement horizontale lorsque lesdits éléments d'appui 2₄-2₇ coopèrent avec les rampes 6₆ dans la zone de pesage pour surélever le réceptacle 2. Le point d'intersection 2₁₄ de la ligne virtuelle qui rejoint le plot avant droit 2₄ au plot arrière gauche 2₇ et de la ligne virtuelle qui rejoint le plot avant gauche 2₅ au plot arrière droit 2₆ passe par une ligne virtuelle verticale ZZ' contenant le centre de gravité 2₈ du réceptacle et de l'objet 1₁ transporté.

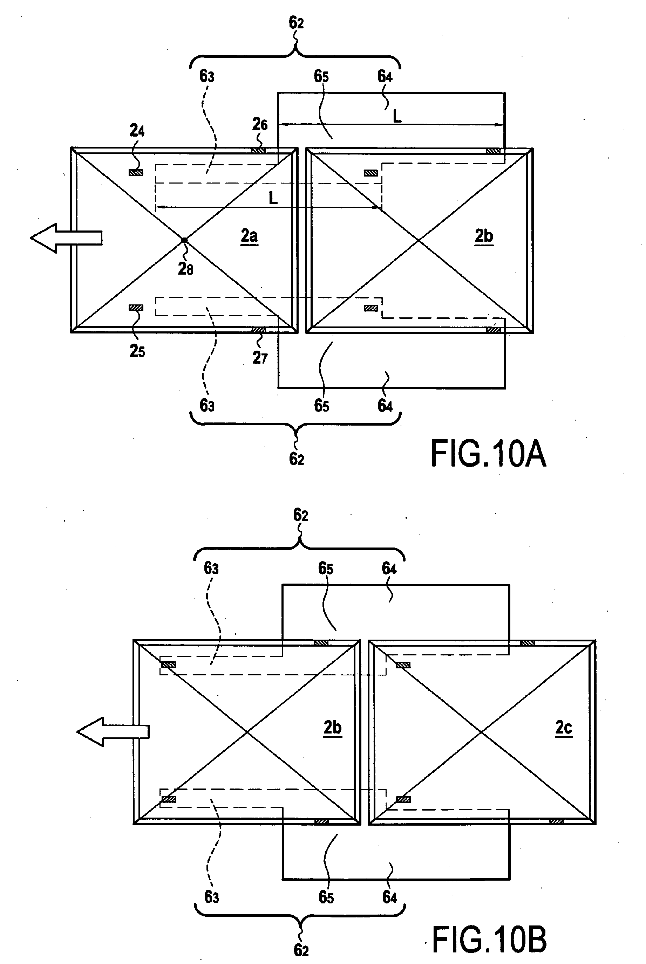

Sur les figures 10A et 10B on a représenté des plaques de pesée en forme de chicane comprenant deux zones avant 6₃ et arrière 6₄ rectangulaires constituées par des rectangles de même longueur L se chevauchant dans la direction longitudinale XX' dans une zone centrale 6₅ des plaques de pesée.

Lesdits éléments d'appui avant 2₄, 2₅ et arrière 2₆,2₇ peuvent coopérer simultanément avec les zones avant 6₃ et arrière 6₄ rectangulaires des plaques de pesée 6₂ car les deux zones avant sont décalées latéralement par rapport aux deux zones arrière des 2 plaques de pesée disposées de part et d'autre de ladite chaîne à l'instar desdits éléments d'appui avant 2₄, 2₅ par rapport aux dits éléments d'appui arrière 2₆, 2₇. Plus précisément les deux éléments d'appui avant 2₄, 2₅ sont plus proches l'un de l'autre et les deux zones rectangulaires avant 6₃ des 2 plaques de pesée sont plus proches l'une de l'autre que ne le sont les deux éléments d'appui arrière 2₆, 2₇. et respectivement les deux zones rectangulaires arrière 6₄ des 2 plaques de pesée. Le dispositif de pesée ou peson se trouvant en position sensiblement centrale sous ladite plaque en forme de chicane ou « s », dans une zone de chevauchement 6₅des deux dites zones avant et arrière rectangulaires.

Le décalage des plots d'appui avant 2₄-2₅ et arrière 2₆-2₇ permet un espacement longitudinal plus grand des plots avant par rapport aux plots arrière et donc une mesure du poids par coopération. simultanée avec des plaques de pesée plus longues que la longueur du réceptacle et donc pendant un temps plus long sans interférer avec la pesée des réceptacles adjacents que si les plots avant et arrière étaient disposés linéairement et les plaques de pesée constituées d'un simple rectangle.

Cette disposition permet aussi d'augmenter la stabilité du réceptacle pendant la pesée et donc au total une pesée plus précise que si les plots avant et arrière étaient disposés linéairement et les plaques de pesée constituées de simples rectangles.

Sur la figure 10A ,on montre au temps t₁, un premier godet 2a a ses plots totalement dégagés des plaques de pesée alors que le godet suivant 2b a ses 4 plots qui abordent juste les zones rectangulaires avant et arrière de s plaques de pesée simultanément. Et, sur la figure 10B, on montre au temps t2 ,le deuxième godet 2b qui a parcouru la distance L correspondant à la longueur des rectangles 6₃ et 6₄ en ayant ses 4 plots simultanément sur les plaques de pesée 6₂ et un troisième godet 2c n'est pas encore en contact avec les plaques de pesée.

Le réceptacle 2 a un rôle multiple :
1- il assure la réception et le maintien de l'objet 1₁ pendant son transport,
2- il permet la mesure du poids de l'objet 1₁ transporté par l'intermédiaire des 4 plots d'appui 2₄-2₇,
3- lors du transport, il permet d'assurer la stabilité de l'objet 1₁ transporté du fait qu'il est transporté par traction comme il sera vu ci-après et stabilisé par une béquille arrière 2₁ qui repose sur la chaîne, et
4- il permet d'évacuer l'objet 1₁ transporté par l'intermédiaire d'un patin de relevage ou patin d'éjection 2₉-2₁₀ soulevé par le système d'éjection 7 comprenant un élément mobile 7₂ actionné par un électro aimant en fonction du poids mesuré.

Le réceptacle comporte en sous face de sa paroi latérale transversale avant des chapes 2₂ formant étrier comprenant des premiers orifices 2₁ aptes à recevoir des formes cylindriques pleines en saillie latérale 5₁ permettent une articulation en rotation autour de leur axe définissant un premier axe de rotation Y₁Y'₁ du réceptacle 2 par rapport au bras de liaison 4, comme décrit ci-après.

Lesdits premiers orifices 2₃ comprennent des surépaisseurs sensiblement semi-circulaires adjacentes et concentriques auxdits orifices, premières surépaisseurs dont les extrémités forment des butées 5₄ disposées l'une par rapport à l'autre formant un angle d'environ 175°. Des formes cylindriques pleines en saillie latérale 5₁ forment le premier axe de rotation Y₁Y'₁ à l'extrémité arrière du bras de liaison 4 et comprennent également des secondes surépaisseurs périphériques sensiblement semi-circulaires en retrait latéral par rapport aux extrémités des dites formes cylindriques 5₁, lesdites secondes surépaisseurs formant des butées 5₃ dont les extrémités sont également disposées l'une par rapport à l'autre selon une inclinaison d'environ 175°. Les extrémités desdites premières et secondes surépaisseurs coopèrent les unes avec les autres en autorisant un débattement angulaire d'environ 10° lorsque les formes cylindriques pleines en saillie latérale formant le premier axe de rotation 5₁ à l'extrémité arrière du bras de liaison 4 sont engagées dans lesdits premiers orifices 2₃ et sont articulés en rotation. Les butées 5₃, 5₄ permettent donc un débattement angulaire libre de ± 5° par rapport à l'horizontale, soit de 10° au total, lorsque ledit réceptacle 2 est en rotation autour dudit premier axe de rotation Y₁Y'₁ à l'extrémité arrière du bras de liaison 4.

L'étrier 3 comprend dans sa partie inférieure deux branches 3₂ latérales verticales disposées longitudinalement aptes à être fixées sur la chaîne par recouvrement venant se cliper sur celle-ci. Deux orifices de fixation 3₃ distants du pas d'un maillon 1₃ emprisonnent les ergots de chaîne 1₄ et assurent ainsi le maintien en position sur la chaîne. L'étrier 3 comprend également à sa base des patins de glissement ou de retenue 3₄ qui permettent de supporter les godets lors de leur trajet de retour en glissant sur un profil 6₇.

L'étrier 3 comprend dans sa partie supérieure 3₁ une forme en saillie latérale cylindrique pleine 5₂ permettant une articulation en rotation autour de leur axe qui définit un deuxième axe de rotation Y₂Y'₂ du bras de liaison par rapport au dit étrier lorsque les formes cylindriques en saillie latérale 5₂ définissant le deuxième axe de rotation Y₂Y'₂ comprennent des troisièmes surépaisseurs périphériques sensiblement semi-circulaires en retrait latéral par rapport à l'extrémité desdites formes cylindriques 5₂, troisièmes surépaisseurs dont les extrémités formes des butées 5₅ disposées l'une par rapport à l'autre selon un angle de 175°, afin de coopérer avec des butées 5₅ constituées de quatrièmes surépaisseurs également circulaires adjacentes et concentriques à desdits seconds orifices 4₈ à l'extrémité avant des bras de liaison 4 tel que décrit ci-après.

Le bras de liaison 4 est formé de deux éléments de liaison co-axiaux 4₁, 4₂ comprenant un premier élément de liaison 4₁ constitué d'un fourreau comprenant une cavité tubulaire interne 4₃ d'axe X₁ X'₁ dans lequel est engagée une partie cylindrique pleine 4₄ d'un deuxième élément de liaison 4₂ qui s'engage et s'emboîte coaxialement dans ladite cavité tubulaire 4₃. Une forme en saillie 4₇ à l'extrémité arrière de ladite partie cylindrique pleine 4₄ du deuxième élément de liaison 4₂ s'expanse élastiquement et vient bloquer l'élément de liaison 4₂ à l'intérieur dudit premier de liaison 4₁.

Ledit premier élément de liaison 4₁ comprend sur sa surface externe des formes cylindriques pleines en saillie latérale s'étendant dans la direction transversale à l'axe X₁ X'₁ du bras 4, pour former ledit premier axe de rotation 5₁ apte à s'engager et pivoter dans lesdits premiers orifices 2₃ en sous face dudit réceptacle. De même, la surface externe dudit premier élément de liaison 4₁ comprend une forme en saillie formant un demi cylindre s'étendant longitudinalement 4₅ constituant une bosse apte à se loger dans une empreinte en creux 4₇ de forme semi cylindrique, une languette 4₆ s'étendant longitudinalement vers l'arrière sur la surface externe supérieure dudit deuxième élément de liaison 4₂ de manière à recouvrir et bloquer la bosse 4₅ dudit premier élément de liaison.

Ledit deuxième élément de liaison 4₂ comprend à son extrémité avant deux chapes latérales 4₉ formant étrier et comprenant des seconds orifices 4₈ aptes à recevoir les formes cylindriques pleines en saillie latérale 5₂ formant le deuxième axe de rotation Y2Y'2 à la partie supérieure 3₁ de l'étrier de fixation 3. Lesdits seconds orifices 4₈ sont adjacents à des quatrièmes surépaisseurs périphériques sensiblement semi circulaires et concentriques dont les extrémités sont inclinées l'une par rapport à l'autre en formant un angle d'environ 175°, lesdites extrémités formant des butées 5₆. Ces butées 5₆ autorisent un débattement angulaire libre de ± 5° par rapport à l'horizontale (total de 10°) avant de venir buter sur les troisièmes surépaisseurs formant les butées 5₅ en périphérie des formes cylindriques pleines 5₂ formant ledit deuxième axe de rotation Y₂Y'₂ à la partie supérieure de l'étrier 3₁. Les extrémités desdites quatrièmes épaisseurs formant des butées 5₆ sont également disposées à 175° l'une de l'autre, de sorte que les butées 5₆ sont calées par les butées 5 lorsque les formes cylindriques en saillie 5₂ sont engagées dans ledit second orifice 4₈ et articulées en rotation, de manière à autoriser un débattement angulaire d'environ 10° en rotation au niveau des éléments d'articulation 4₈-4₉, 5₂ autour dudit deuxième axe de rotation Y₂Y'₂.

Le bras de liaison 4 permet donc de relier le réceptacle 2 à l'étrier de fixation sur la chaîne 3, de telle sorte que la rotation conjuguée du bras de liaison autour dudit premier axe de rotation 5₁ et du réceptacle autour dudit second axe de rotation 5₂ permet de soulever en translation verticale ledit réceptacle restant en position sensiblement horizontale dans la zone de pesée.

D'autre part, la combinaison de ladite languette 4₆ et de ladite bosse 4₅ constitue des moyens de blocage contrôlé qui assurent le blocage angulaire dudit premier élément de liaison par rapport audit deuxième élément de liaison et par conséquent le blocage angulaire dudit réceptacle par rapport audit bras de liaison en rotation par rapport à l'axe longitudinal X₁ X'₁ dudit bras de liaison, avant et pendant la pesée.

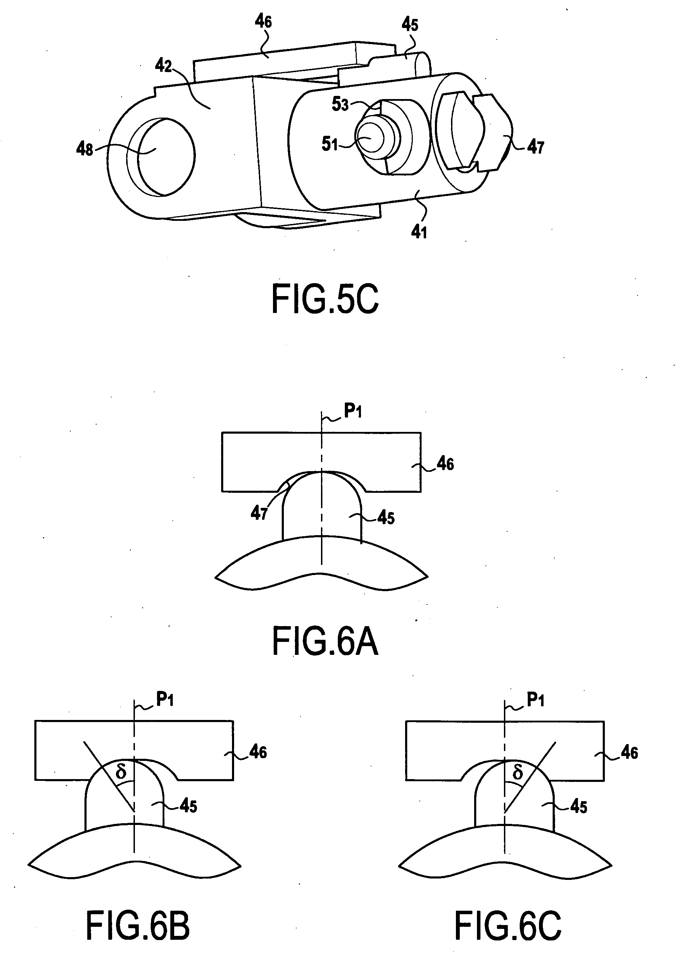

Toutefois, la languette 4₆ est creusée 4₇ de manière à permettre un certain débattement angulaire autour dudit axe longitudinal du bras de liaison X₁ X'₁ de δ = ± 5°, défini par les positions limites représentées sur les figures 6B et 6C autour de la position centrale de la figure 6A. Ce débattement angulaire entre les deux positions limites gauche et droite autour de la position centrale est permis par la configuration respective de la bosse 4₅ qui présente en section transversale un rayon de courbure convexe plus petit que le rayon de courbure concave du creux correspondant 4₇ de la languette. Ce débattement angulaire de ± 5° par rapport aux plan axial vertical P1 et bras de liaison 4 de sorte que le réceptacle reste en position sensiblement horizontale pendant la phase de pesée par rapport à un pivotement latéral autour de l'axe X₁ X'₁ du bras de liaison pendant la pesée. Ce débattement angulaire est utile car pendant la pesée, quand le réceptacle est posé sur les quatre plaques de pesée 6₂-6₅ par l'intermédiaire des quatre plots d'appui 2₄-2₇ il se peut que les plaques de pesée ne soient pas à un même niveau des deux côtés de la chaîne. Et le débattement angulaire permet que les quatre plots d'appui reposent néanmoins simultanément sur les quatre plaques de pesée.

Lors de l'éjection de l'objet 1₁, il est nécessaire de dépasser l'une ou l'autre des deux positions limites des figures 6B et 6C selon que l'on veut déverser le produit à droite ou à gauche. L'excroissance ou saillie 4₅ doit alors dépasser lesdites positions limites en soulevant la languette 4₆, ce qui est rendu possible par déformation élastique de cette dernière, le retour en position centrale (fig.6A) étant réciproque.

La troisième rotation autour de l'axe longitudinal X₁ X'₁ du bras de liaison permise par le jeu laissé entre les positions limites de l'excroissance 4₅ dans le creux 4₇ de la languette 4₆ permet d'obtenir un troisième degré de liberté pour orienter le réceptacle en basculement latéral limité par rapport à un plan horizontal pendant la pesée, de manière à compenser les défauts éventuels de positionnement coplanaire des deux plaques de pesée 6₂ de part et d'autre du réceptacle.

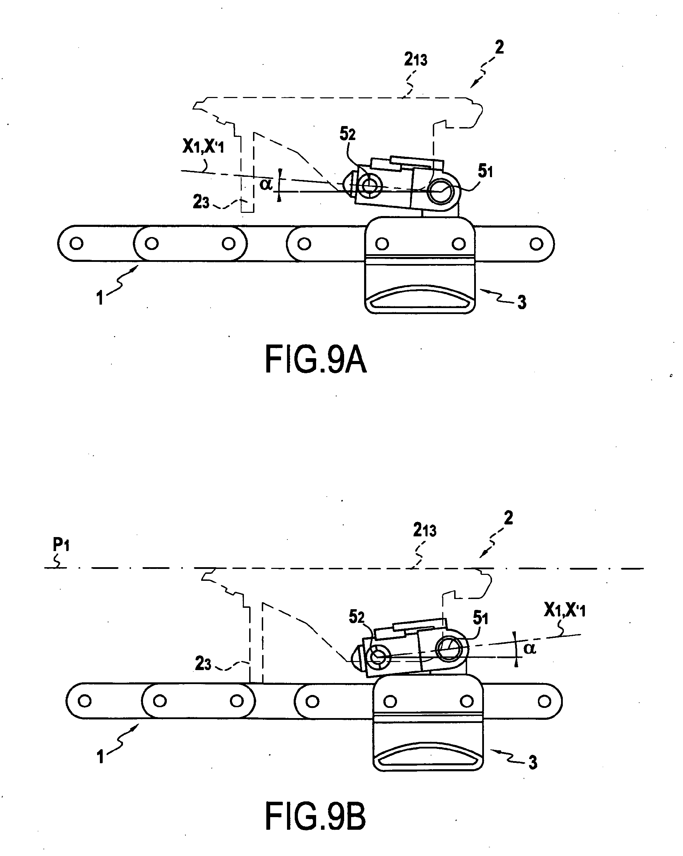

Comme représenté sur les figures 9A et 9B, les rotations conjuguées du bras de liaison 4 et du réceptacle 2 autour desdits premier axe de rotation 5₁ et deuxième axe de rotation 5₂ permettent une translation verticale du godet, de sorte que le plan P1 tangent à la bordure périphérique supérieure 2₁₃ du réceptacle 2 reste horizontal.

En position basse du réceptacle (fig.9B) avant et après la zone de pesée,l'axe X1X'1 du bras de liaison 4 est incliné en pente descendante vers l'arrière d'un angle α de 5° par rapport à l'horizontale. Lorsque le godet aborde la pente inclinée de la rampe 6₆ conduisant à la zone de pesée, le réceptacle est soulevé en translation verticale ce qui est autorisé par pivotement de 10° du bras de liaison qui se retrouve en pente inclinée descendante vers l'avant (fig.9A) avec un angle de 5° par rapport à l'horizontale. Ce qui induit une translation verticale du réceptacle d'une hauteur H=L x sin2α , soit pour une longueur de bras de liaison L=29,5 mm et un angle de α = 5°, une hauteur H = 5 mm.

A l'extrémité avant de la zone de pesée, les rampes 6₆ sont inclinées en pente descendante vers l'avant de manière à ce que les réceptacles 2 puissent redescendre en appui de la béquille 2₃ sur la chaîne 1₂ avant d'aborder la zone d'éjection 7₁. Dans la zone d'éjection 7₁ le dispositif d'éjection 7 comprend un électro-aimant qui provoque la levée d'un élément mobile constitué par une patte de relevage 7₂ qui pivote autour d'un axe transversal horizontal à sa base et vient exercer une poussée verticale vers le haut sur les patins d'éjection ou patins de relevage 2₉,2₁₀ situés en sous face du réceptacle 2 dans sa partie avant. Ce mouvement de poussée verticale combinée à l'avancement du godet 1 dans la direction longitudinale XX' provoque une rotation du réceptacle autour de l'axe X₁X'₁ du bras de liaison 4 par l'intermédiaire d'une rotation dudit premier élément de liaison 4₁ en forme de fourreau 4₁ autour dudit deuxième élément de liaison coaxial 4₂ du bras de liaison 4. En effet, bien que la forme en saillie constituant la bosse 4₅ sur la surface externe du fourreau 4₁ soit bloquée en rotation dans le creux 4₇ de la languette 4₆, l'effort exercé sur le patin de relevage 2₉ ou 2₁₀ déplace la languette 4₆ qui est souple et déformable verticalement et libère l'élément en saillie 4₅ après déformation élastique de la languette 4₆, ce qui autorise la rotation complète du premier élément de liaison 4₁ autour du deuxième élément de liaison 4₂ et le basculement latéral complet du réceptacle 2 permettant un déversement par simple et unique mouvement en rotation du réceptacle autour d'un axe longitudinal axial X₁ X'₁ du bras de liaison.

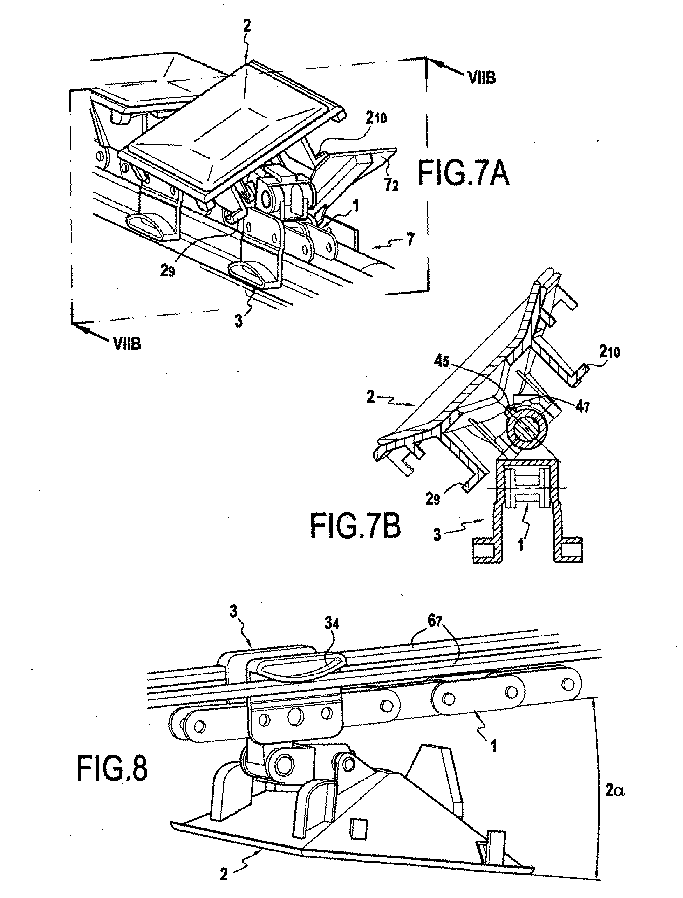

Comme représenté sur la figure 8, en position de retour le godet est retenu solidaire de la chaîne par des patins de glissement 3-4 qui glissent sur des glissières 6-7 au dessus de la chaîne. Et, les débattements angulaires autorisés ou de ± 5° par rapport à un plan horizontal des deux dits premier et deuxième axes de rotation limitent l'inclinaison du plan P1 tangent à la bordure périphérique de l'ouverture 2-1₃ du godet 2 sous l'étrier 3, à une valeur cumulée de 2 α=10° par rapport à l'horizontale en pente descendante vers l'arrière.

## Revendications

1. Dispositif support (1₁) d'un objet tel qu'un fruit ou un légume pour son calibrage pondéral, apte à être transporté par un convoyeur sans fin (1₂) dans une direction longitudinale (XX'), en particulier une chaîne sans fin, et apte à coopérer avec un dispositif de pesée (6) dans une zone de pesée (6₁) le long dudit convoyeur, et au moins un dispositif d'éjection (7), ledit dispositif de support (1) comprenant :
- un réceptacle (2) apte à contenir un dit objet (1₁), et
- un étrier (3) fixé à sa base sur ledit convoyeur sans fin (1₂), et
- des moyens de liaison (4) entre ledit réceptacle (2) et ledit étrier (3),
■ ledit réceptacle (2) étant relié et articulé en rotation par rapport auxdits moyens de liaison (4) par des éléments d'articulation en rotation autour d'un premier axe de rotation (2₁-2₂,5₁),
■ lesdits moyens de liaison (4) étant reliés et articulés en rotation par rapport audit étrier (3) par des éléments d' articulation en rotation autour d'un deuxième axe de rotation (4₈-4₉, 5₂),
■ lesdits premier et deuxième axes de rotation s'étendant dans une direction transversale (Y₁Y'₁,Y₂Y'₂),
■ de sorte que les rotations conjuguées dudit réceptacle (2) et desdits moyens de liaison (4) autour desdits premier et deuxième axes de rotation permettent un soulèvement dudit réceptacle en position sensiblement horizontale dans ladite zone de pesée,
dispositif **caractérisé en ce que** :
- lesdits moyens de liaison consistent en un bras de liaison (4), comprenant deux premier et deuxième éléments de liaison coaxiaux selon un axe longitudinal commun (X1X'1) constituant un troisième axe de rotation,
- ledit premier élément de liaison (4₁) étant solidaire desdits éléments d'articulation en rotation du réceptacle autour dudit premier axe de rotation (2₁-2₂, 5₁), et apte à être entraîné en rotation autour dudit troisième axe de rotation (X₁X'₁),
- ledit deuxième élément de liaison (4₂) étant solidaire desdits éléments d'articulation en rotation du bras de liaison autour dudit deuxième axe de rotation (4₈-4₉, 5₂) ,et
- lesdits éléments d'articulations en rotation autour desdits premier et deuxième axe de rotation étant fixes en translation latérale dans une dite direction transversale.

2. Dispositif selon la revendication 1 **caractérisé en ce que** :
- ledit premier axe de rotation (Y₁Y'₁) est situé en avant du centre de gravité (2₈) dudit réceptacle, et ledit deuxième axe de rotation (Y₂Y'₂) est situé en avant dudit premier axe de rotation, et
- les éléments d'articulation en rotation dudit réceptacle autour dudit premier axe de rotation (5₁) sont situés du côté de l'extrémité arrière du dit premier élément de liaison (4-1) du bras de liaison, les dits éléments d'articulation en rotation autour du dit deuxième axe de rotation (4₈-4₉, 5₂) étant situés du coté de l'extrémité avant dudit deuxième élément de liaison du bras de liaison , et
- ledit réceptacle comprend une béquille (2₃) située à l'arrière dudit centre de gravité du réceptacle, apte à reposer sur un premier élément support (1₃), indépendant dudit étrier, la dite béquille étant apte à maintenir par gravité ledit réceptacle en position basse sensiblement horizontale lorsque ledit réceptacle transporte un dit objet et ne coopère pas avec lesdits dispositif de pesée et dispositifs d'éjection.

3. Dispositif selon l'une des revendications 1 ou 2, **caractérisé en ce qu'**il comprend des moyens de blocage angulaire contrôlé (4₅,4₆) aptes à
- maintenir ledit réceptacle en position sensiblement horizontale en rotation autour dudit troisième axe de rotation lorsque celui-ci est surélevé dans ladite zone de pesée et
- libérer la rotation dudit réceptacle autour dudit troisième axe de rotation lorsque celui-ci est soumis à une poussée verticale vers le haut dessous un de ses cotés par l'effet d'un dit dispositif d'éjection.

4. Dispositif selon la revendication 2 ou 3, **caractérisé en ce que** la dite béquille présente une face plate inférieure (2₁₁) apte à reposer sur un dit élément support (1₃) consistant en un maillon de ladite chaîne.

5. Dispositif selon l'une des revendications 1 à 4 **caractérisé en ce que**
- lesdits éléments d'articulations en rotation dudit réceptacle autour dudit premier axe de rotation (2₁-2₂, 5₁) sont matérialisés par des formes complémentaires dudit premier élément de liaison du côté de son extrémité arrière (5₁), et dudit réceptacle en sous face de celui-ci (2₁-2₂), et
- lesdits éléments d'articulation en rotation autour dudit deuxième axe de rotation (4₈-4₉, 5₂) sont matérialisés par des formes complémentaires dudit deuxième élément de liaison du bras de liaison du côté de son extrémité avant (5₂) et dudit étrier (4₈,4₉) dans sa partie supérieure (3₁).

6. Dispositif selon l'une des revendication 1 à 5 **caractérisé en ce que** ledit premier élément de liaison (4₁,) dudit bras de liaison est constitué par un fourreau comportant une cavité tubulaire (4₃) mobile en rotation autour dudit troisième axe de rotation, dans laquelle vient s'emboîter une partie mâle cylindrique (4₄) coaxiale dudit deuxième élément de liaison (4₂) fixe en rotation par rapport au dit troisième axe de rotation

7. Dispositif selon l'une des revendications 3 à 6 **caractérisé en ce que** lesdits moyens de blocage angulaire contrôlé comprennent :
■ un premier élément de butée (4₅) rigide, solidaire dudit premier élément de liaison (4₁), et
■ un premier élément de retenue (4₆) déformable et solidaire dudit deuxième élément de liaison (4₂),
■ ledit premier élément de butée (4₅) étant apte à déformer ledit premier élément de retenue (4₆) lorsque ledit réceptacle (2) coopère avec un dit dispositif d'éjection pour basculer latéralement de manière à déverser ledit objet qu'il contient, ledit premier élément de retenue étant apte à retenir ledit premier élément de butée (4₅) en autorisant un léger débattement angulaire, de préférence de ± 5°, de manière à maintenir ledit réceptacle en position sensiblement horizontale lorsque ledit réceptacle ne coopère pas avec ledit dispositif d'éjection.

8. Dispositif selon la revendication 7, **caractérisé en ce que** :
- ledit premier élément de retenue (4₆) est constitué par une languette déformable comprenant en sous face une empreinte en creux. (4₇), et ledit premier élément de butée (4₅) est constitué par une partie en saillie formant une bosse à la surface externe dudit premier élément de liaison, et
- ladite bosse est apte à être maintenue à l'intérieur dudit creux (4₇) autorisant un léger débattement angulaire de préférence inférieur ou égal à 5° par rapport à un plan axial vertical,
- la déformation de ladite languette est telle que la dite bosse est apte à être complètement dégagée dudit creux pour permettre un basculement latéral dudit réceptacle autorisant le déversement dudit objet lorsque le dit réceptacle coopère avec un dit dispositif d'éjection.

9. Dispositif selon l'une des revendications 1 à 8, **caractérisé en ce qu'**il comprend des deuxièmes éléments de butée (5₃-5₄,5₅-5₆) situés au niveau desdits éléments d'articulation autour des premier et respectivement deuxième axes de rotation (5₁, 5₂), lesdits deuxièmes éléments de butée (5₃, 5₄) étant aptes à limiter lesdites rotations d'un angle α inférieur ou égal à 10°, de préférence 5° par rapport à l'horizontale desdits bras de liaison et respectivement dudit réceptacle.

10. Dispositif selon l'une des revendications 1 à 9, **caractérisé en ce que** ledit réceptacle comprend au moins 4 éléments d'appui (2₄,2₅,2₆,2₇) comprenant deux éléments d'appui avant droit (2₄) et avant gauche (2₅) et deux éléments d'appui arrière droit (2₆) et arrière gauche (2₇), lesdits éléments d'appui étant disposés symétriquement par rapport à un plan axial vertical (P) dudit réceptacle dans ladite direction longitudinale (XX'), les dits éléments d'appui les dits éléments d'appui étant tangents à leur base avec un même plan d'appui (P-2) , et le point d'intersection (2₁₄) des droites joignant lesdits éléments d'appui avant droit (2₄) et avant gauche (2₅) aux éléments d'appui arrière gauche (2₇) et respectivement arrière droit (2₆) est situé sur une même droite (ZZ') perpendiculaire à un même plan d'appui (P2), ladite droite perpendiculaire (ZZ') passant par ledit centre de gravité (2₈) du réceptacle.

11. Dispositif selon la revendication 10, **caractérisé en ce que** lesdits éléments d'appui avant (2₄,2₅) sont décalés latéralement par rapport auxdits éléments d'appui arrière (2₆,2₇),de préférence lesdits éléments d'appui avant (2₄,2₅) sont plus proche l'un de l'autre que lesdits éléments d'appui arrière (2₆,2₇) ne le sont.

12. Dispositif selon l'une des revendications 1 à 11, **caractérisé en ce que** ledit réceptacle comprend en sous face ou latéralement des deuxièmes d'appui ou patins d'éjection (2₉, 2₁₀) aptes à coopérer avec un élément mobile (7₁) dudit dispositif d'éjection, ledit élément mobile étant apte à exercer une poussée verticale sur ledit deuxième élément d'appui au dit patin d'éjection, ledit deuxième élément d'appui étant situé en avant dudit premier axe de rotation.

13. Dispositif support selon l'une des revendications 1 à 12, **caractérisé en ce que** lesdits réceptacle, dit étrier et dits moyens de liaison sont entièrement réalisés en matière plastique.

14. Dispositif de calibrage pondéral d'un objet (1) tel qu'un fruit ou un légume, comprenant une pluralité de dispositifs supports (1) selon l'une des revendications 1 à 13, fixés à un dit convoyeur à chaîne sans fin (1₃), et au moins un dispositif de pesée (6) dans une zone de pesée (6₁) et au moins un dispositif d'éjection (7) dans une zone d'éjection (7₁) d' un dit objet hors dudit réceptacle, après basculement latéral dudit réceptacle.

15. Dispositif de calibrage pondéral selon la revendication 14, **caractérisé en ce que** ledit dispositif de pesée comprend :
- au moins une plaque de pesée (6₂) de chaque côté dudit convoyeur (1₁), lesdites plaques étant disposées de telle sorte qu'au moins 4 éléments d'appui avant (2₄,2₅) et arrière (2₆,2₇) d'un dit réceptacle, reposent simultanément sur respectivement les quatre zones avant (6₃) et arrière (6₄) correspondantes des dites plaques de pesée sans que les éléments d'appui des réceptacles précédent et suivant ne reposent sur les mêmes dites plaques de pesée, et
- des rampes (6₆) conduisant aux dites plaques de pesée, de part et d'autre de ladite chaîne dans la zone de pesée, les dites rampes étant initialement inclinées puis horizontales de sorte que ledit réceptacle glissant en appui sur les dites rampes soit soulevé en translation pour être maintenu en sustentation par le seul dit bras de liaison en position sensiblement horizontale lorsqu'il repose sur lesdites plaques de pesée.

16. Dispositif de calibrage pondéral selon la revendication 15, **caractérisé en ce** chaque plaque de pesée (6₂) comprend une zone avant (6₃) décalées latéralement par rapport à une zone arrière (6₄),et chaque réceptacle comprend au moins 2 éléments d'appui avant (2₄,2₅) pareillement décalés latéralement par rapport à au moins 2 éléments d'appui arrière(2₆,2₇),lesdites plaques de pesée(6₂) étant plus longues qu'un dit réceptacle et disposées de telle sorte que les au moins quatre dits éléments d'appui avant (2₄,2₅) et arrière (2₆,2₇) d'un dit réceptacle reposent simultanément sur respectivement les quatre zones avant (6₃) et arrière (6₄) correspondantes desdites plaques de pesée sans que les éléments d'appui avant (2₄,2₅) et arrière (2₆,2₇) des réceptacles précédent et suivant ne reposent sur les mêmes dites plaques de pesée.

17. Dispositif selon l'une des revendications 14 à 16, **caractérisé en ce que** ledit dispositif d'éjection comprend un élément mobile (7₂) apte à pivoter de bas en haut, commandé par un électro-aimant en fonction des informations communiquées par le dispositif de pesée, pour venir exercer une poussée verticale sur ledit troisième élément ou patins d'appui (2₉,2₁₀) et provoquer la rotation dudit réceptacle autour du dit troisième axe et déversement dudit objet dans une zone de réception.

## Claims

1. A support device (1) for supporting an article such as a fruit or a vegetable for calibration by weight, the device being suitable for being transported by an endless conveyor in a longitudinal direction (XX'), in particular an endless chain, and suitable for co-operating both with a weigher device (6) in a weighing zone (6₁) along said conveyor, and with at least one ejector device (7), said support device (1) comprising:
· a receptacle (2) suitable for containing a said article (1₁); and
· a bracket (3) fastened via its base to said endless conveyor (1₂); and
· connection means (4) between said receptacle (2) and said bracket (3);
· said receptacle (2) being connected to and hinged to turn relative to said connection means (4) by hinge elements for turning about a first axis of rotation (2₁-2₂, 5₁);
· said connection means (4) being connected to and hinged to turn relative to said bracket (3) by hinge elements for turning about a second axis of rotation (4₈₋4₉, 5₂);
· said first and second axes of rotation extending in a transverse direction (Y₁Y'_{1'} Y₂Y'₂);
· whereby the combined turning of said receptacle (2) and said connection means (4) about said first and second axes of rotation enable said receptacle to be raised in a substantially horizontal position in said weighing zone;
the device being **characterized in that**:
· said connection means consist of a connection arm (4) having first and second connection elements on a common longitudinal axis (X₁X'₁) constituting a third axis of rotation;
· said first connection element (4₁) being secured to said hinge element for turning the receptacle about said first axis of rotation (2₁-2₂, 5₁), and being suitable for being turned about said third axis of rotation (X₁X'₁);
· said second connection element (4₂) being secured to said hinge elements for turning the connection arm about said second axis of rotation (4₈-4₉, 5₂); and
· said hinge elements for turning about said first and second axes of rotation being stationary in lateral translation in a said transverse direction.

2. A device according to claim 1, **characterized in that**:
· said first axis of rotation (Y₁Y'₁) is situated in front of the center of gravity (2₈) of said receptacle, and said second axis of rotation (Y₂Y'₂) is situated in front of said first axis of rotation; and
· the hinge elements for turning said receptacle about said first axis of rotation (5₁) are situated beside the rear end of said first connection element (4₁) of the connection arm, said hinge elements for turning about a said second axis of rotation (4₈-4₉, 5₂) being situated beside the front end of said second connection element of the connection arm; and
· said receptacle includes a prop (2₃) situated behind said center of gravity of the receptacle, suitable for resting on a first support element (1₃) that is independent of said bracket, said prop being suitable for maintaining said receptacle in the substantially horizontal low position by gravity when said receptacle is transporting a said article, and not co-operating with said weigher device and said ejector devices.

3. A device according to claim 1 or claim 2, **characterized in that** it comprises controlled angle blocking means (4₅, 4₆) suitable for:
· holding said receptacle in a substantially horizontal position while turning about said third axis of rotation when it is raised in said weighing zone; and
· releasing said receptacle to turn about said third axis of rotation when it is subjected to vertical upward thrust under one of its sides by the effect of a said ejector device.

4. A device according to claim 2 or claim 3, **characterized in that** said prop presents a flat bottom face (2₁₁) suitable for resting on a said support element (1₃) constituting a link of said chain.

5. A device according to any one of claims 1 to 4, **characterized in that**:
· said hinge elements for turning said receptacle about said first axis of rotation (2₁-2₂, 5₁) are embodied by complementary shapes of said first connection element beside its rear end (5₁) and of said receptacle therebeneath (2₁-2₂); and
· said hinge elements for turning about said second axis of rotation (4₈-4₉, 5₂) are embodied by complementary shapes of said second connection element of the connection arm beside its front end (5₂) and of said bracket (4₈, 4₉) in its top portion (3₁).

6. A device according to any one of claims 1 to 5, **characterized in that** said first connection element (4₁) of said connection arm is constituted by a bushing having a tubular cavity (4₃) that is movable to turn about said third axis of rotation, and in which a cylindrical male portion (4₄) is received, the male portion lying on the axis of said second connection element (4₂) that is prevented from turning relative to said third axis of rotation.

7. A device according to any one of claims 3 to 6, **characterized in that** said controlled angular blocking means comprise:
· a rigid first abutment element (4₅) secured to said first connection element (4₁); and
· a deformable first retaining element (4₆) secured to said second connection element (4₂);
· said first abutment element (4₅) being suitable for deforming said first retaining element (4₆) when said receptacle (2) co-operates with a said ejector device to tilt laterally so as to deposit said article it contains, said first retaining element being suitable for retaining said first abutment element (4₅) while allowing a small amount of angular displacement, preferably of ±5°, so as to maintain said receptacle in a substantially horizontal position when said receptacle is not co-operating with said ejector device.

8. A device according to claim 7, **characterized in that**:
· said first retaining element (4₆) is constituted by a deformable tongue having therebeneath a recess (4₇), and said first abutment element (4₅) is constituted by a projecting portion forming a projection from the outside surface of said first connection element; and
· said projection is suitable for being held inside said recess (4₇) allowing a small amount of angular movement, preferably less than or equal to 5°, relative to a vertical axial plane;
· the deformation of said tongue is such that said projection is suitable for being completely disengaged from said recess to enable said receptacle to tilt laterally and allow said article to be deposited when said receptacle co-operates with a said ejector device.

9. A device according to any one of claims 1 to 8, **characterized in that** it includes second abutment elements (5₃-5₄, 5₅-5₆) situated on said hinge elements about the first and second axes of rotation (5₁, 5₂) respectively, said second abutment elements (5₃, 5₄) being suitable for limiting rotation about said axes to an angle α less than or equal to 10°, preferably 5°, relative to the horizontal of said connection arm and of said receptacle, respectively.

10. A device according to any one of claims 1 to 9, **characterized in that** said receptacle has at least four bearing elements (2₄, 2₅, 2₆, 2₇) comprising front right and front left bearing elements (2₄ and 2₅), and rear right and rear left bearing elements (2₆ and 2₇), said bearing elements being disposed symmetrically about a vertical axial plane (P) of said receptacle in said longitudinal direction (XX'), said bearing elements being tangential at their bases with a common bearing plane (P₂), and the point of intersection (2₁₄) of the straight lines interconnecting said front right and front left bearing elements (2₄ and 2₅) and said rear left and rear right bearing elements (2₇ and 2₆) respectively being situated on a common straight line (ZZ') perpendicular to a common bearing plane (P₂), said perpendicular straight line (ZZ') passing through said center of gravity (2₈) of the receptacle.

11. A device according to claim 10, **characterized in that** said front bearing elements (2₄, 2₅) are offset laterally relative to said rear bearing elements (2₆, 2₇), said front bearing elements (2₄, 2₅) preferably being closer to each other than said rear bearing elements (2₆, 2₇).

12. A device according to any one of claims 1 to 11, **characterized in that** said receptacle includes therebeneath or to one side second bearing elements or ejector shoes (2₉, 2₁₀) suitable for co-operating with a moving element (7₁) of said ejector device, said moving element being suitable for exerting vertical thrust on said second bearing element to said ejector shoe, said second bearing element being situated in front of said first axis of rotation.

13. A support device according to any one of claims 1 to 12, **characterized in that** said receptacle, said bracket, and said connection means are made entirely out of plastics material.

14. A device for calibrating articles (1) such as fruit or vegetables by weight, the device comprising a plurality of support devices (1) according to any one of claims 1 to 13 fastened to a said endless chain conveyor (1₃), and at least one weigher device (6) in a weighing zone (6₁), and at least one ejector device (7) in an ejector zone (7₁) for ejecting a said article from said receptacle after titling said receptacle laterally.

15. A device for calibrating by weight according to claim 14, the device being **characterized in that** the weigher device comprises:
· at least one weigh plate (6₂) on each side of said conveyor (1₂), said plates being placed in such a manner that at least four bearing elements for a said receptacle, comprising front and rear bearing elements (2₄, 2₅; 2₆, 2₇), rest simultaneously on four respective corresponding front and rear zones (6₃, 6₄) of said weigh plates without the bearing elements of the preceding and following receptacles resting on said weigh plates; and
· ramps (6₆) leading to said weigh plates on either side of said chain in the weighing zone, said ramps being initially inclined and then horizontal such that said receptacle sliding while supported on said ramps is raised in translation so as to be held lifted by the said connection arm alone in a substantially horizontal position while it is resting on said weigh plates.

16. A device for calibrating by weight according to claim 15, **characterized in that** each weigh plate (6₂) has a front zone (6₃) offset laterally relative to a rear zone (6₄), and each receptacle has at least two front bearing elements (2₄, 2₅) likewise offset laterally relative to at least two rear bearing elements (2₆, 2₇), said weigh plates (6₂) being longer than a said receptacle and being disposed in such a manner that at the least four said bearing elements (2₄, 2₅; 2₆, 2₇) at the front and rear of a said receptacle rests simultaneously on four respective corresponding front and rear zones (6₃, 6₄) of said weigh plates without the front and rear bearing elements (2₄, 2₅; 2₆, 2₇) of the preceding and following receptacles resting on the same said weigh plates.

17. A device according to any one of claims 14 to 16, **characterized in that** said ejector device comprises a moving element (7₂) suitable for pivoting upwards under the control of an electromagnet as a function of information communicated by the weigher device, in order to exert vertical thrust on said third element or ejector shoes (2₉, 2₁₀) causing said receptacle to turn about said third axis and deposit said article into a reception zone.

## Patentansprüche

1. Auflagevorrichtung (1₁) für einen Gegenstand, wie zum Beispiel eine Frucht oder ein Gemüse, für dessen Gewichtskalibrierung, dazu ausgelegt, von einem Endlosförderer (1₂), insbesondere einer Endloskette, in eine Längsrichtung (XX') transportiert zu werden, und dazu ausgelegt, mit einer Wiegevorrichtung (6) in einer Wiegezone (6₁) entlang des Förderers und mit mindestens einer Auswurfvorrichtung (7) zusammenzuwirken, wobei die Auflagevorrichtung (1₁) aufweist:
- eine Aufnahme (2), die dazu ausgebildet ist, einen Gegenstand (1₁) zu enthalten, und
- einen Bügel (3), der an seiner Basis auf dem Endlosförderer (1₂) befestigt ist, und
- Verbindungsmittel (4) zwischen der Aufnahme (2) und dem Bügel (3),
• wobei die Aufnahme (2) drehbar in bezug auf die Verbindungsmittel (4) durch Drehanlenkmittel um eine erste Drehachse (2₁-2₂, 5₁) verbunden und angelenkt ist,
• wobei die Verbindungsmittel (4) drehbar in bezug auf den Bügel (3) durch Drehanlenkelemente um eine zweite Drehachse (4₈-4₉, 5₂) verbunden und angelenkt sind,
• wobei sich die erste und zweite Drehachse in eine Querrichtung (Y₁Y'₁, Y₂Y'₂) erstrecken,
• so daß die konjugierten Drehungen der Aufnahme (2) und der Verbindungsmittel (4) um die erste und zweite Drehachse ein Hochheben der Aufnahme in eine im wesentlichen horizontale Position in der Wiegezone erlauben,
wobei die Vorrichtung **dadurch gekennzeichnet, daß**:
- die Verbindungsmittel aus einem Verbindungsarm (4) bestehen, der zwei erste und zweite koaxiale Verbindungselemente entlang einer gemeinsamen Längsachse (X₁X'₁), die eine dritte Drehachse bildet, aufweist,
- das erste Verbindungselement (4₁) fest mit den Drehanlenkelementen der Aufnahme um die erste Drehachse (2₁-2₂, 5₁) verbunden ist und in Drehung um die dritte Drehachse (X₁X'₁) angetrieben werden kann,
- das zweite Verbindungselement (4₂) fest mit den Drehanlenkelementen des Verbindungsarms um die zweite Drehachse (4₈-4₉, 5₂) verbunden ist und
- die Drehanlenkelemente um die erste und die zweite Drehachse fest bezüglich seitlicher Verschiebung in eine Querrichtung sind.

2. Vorrichtung nach Anspruch 1, **dadurch gekennzeichnet:**
- **daß** die erste Drehachse (Y₁Y'₁) vor dem Schwerpunkt (2₈) der Aufnahme liegt, und daß die zweite Drehachse (Y₂Y'₂) vor der ersten Drehachse liegt, und
- **daß** die Drehanlenkelemente der Aufnahme um die erste Drehachse (5₁) auf der Seite des hinteren Endes des ersten Verbindungselements (4-1) des Verbindungsarms liegen, wobei die Drehanlenkelemente um die zweite Drehachse (4₈-4₉, 5₂) auf der Seite des vorderen Endes des zweiten Verbindungselements des Verbindungsarms liegen, und
- **daß** die Aufnahme einen Ständer (2₃) aufweist, der sich hinter dem Schwerpunkt der Aufnahme befindet und auf einem ersten Auflageelement (1₃) aufliegen kann, das von dem Bügel unabhängig ist, wobei der Ständer die Aufnahme schwerkraftbedingt in im wesentlichen horizontaler Tiefstellung halten kann, wenn die Aufnahme einen Gegenstand transportiert und nicht mit der Wiegevorrichtung und den Auswurfvorrichtungen zusammenwirkt.

3. Vorrichtung nach einem der Ansprüche 1 oder 2, **dadurch gekennzeichnet, daß** sie Mittel zum gesteuerten winkelmäßigen Blockieren (4₅, 4₆) aufweist, die
- die Aufnahme in im wesentlichen horizontaler Position um die dritte Drehachse drehbar halten können, wenn diese in die Wiegezone gehoben ist, und
- die Drehung der Aufnahme um die dritte Drehachse freigeben können, wenn diese einem vertikalen Schub nach oben unter einer ihrer Seiten durch Wirkung einer Auswurfvorrichtung ausgesetzt ist.

4. Vorrichtung nach Anspruch 2 oder 3, **dadurch gekennzeichnet, daß** der Ständer eine ebene Unterseite (2₁₁) aufweist, die auf dem Auflageelement (1₃) aufliegen kann, das aus einem Glied der Kette besteht.

5. Vorrichtung nach einem der Ansprüche 1 bis 4, **dadurch gekennzeichnet**
- **daß** die Drehanlenkelemente der Aufnahme um die erste Drehachse (2₁-2₂, 5₁) aus komplementären Formen des ersten Verbindungselements auf der Seite seines hinteren Endes (5₁) und der Aufnahme auf deren Unterseite (2₁-2₂) hergestellt sind und
- **daß** die Drehanlenkelemente um die zweite Drehachse (4₈-4₉, 5₂) aus komplementären Formen des zweiten Verbindungselements des Verbindungsarms auf der Seite seines vorderen Endes (5₂) und des Bügels (4₈, 4₉) in seinem Oberteil (3₁) hergestellt sind.

6. Vorrichtung nach einem der Ansprüche 1 bis 5, **dadurch gekennzeichnet, daß** das erste Verbindungselement (4₁) des Verbindungsarms aus einer Hülse besteht, die einen röhrenförmigen Hohlraum (4₃) aufweist, der drehbar um die dritte Drehachse beweglich ist, in welche sich ein zylindrischer Steckteil (4₄) einklinken kommt, das zu dem zweiten Verbindungselement (4₂), das bezüglich Drehung um die dritte Drehachse stationär ist, koaxial ist.

7. Vorrichtung nach einem der Ansprüche 3 bis 6, **dadurch gekennzeichnet, daß** die gesteuerten Winkelblockiermittel aufweisen:
• ein erstes starres Anschlagelement (4₅), das fest mit dem ersten Verbindungselement (4₁) verbunden ist und
• ein erstes Rückhalteelement (4₆), das verformbar ist und fest mit dem zweiten Verbindungselement (4₂) verbunden ist,
• wobei das erste Anschlagelement (4₅) das erste Rückhalteelement (4₆) verformen kann, wenn die Aufnahme (2) mit einer Auswurfvorrichtung zusammenwirkt, um seitlich derart zu kippen, daß der in ihr enthaltene Gegenstand ausgekippt wird, wobei das erste Rückhalteelement das erste Anschlagelement (4₅) zurückhalten kann, indem es ein leichtes Winkelausschlagen vorzugsweise zu ± 5° derart gestattet, daß die Aufnahme in im wesentlichen horizontaler Position gehalten wird, wenn die Aufnahme nicht mit der Auswurfvorrichtung zusammenwirkt.

8. Vorrichtung nach Anspruch 7, **dadurch gekennzeichnet, daß**:
- das erste Rückhalteelement (4₆) aus einer verformbaren Lasche besteht, die auf der Unterseite einen vertieften Abdruck (4₇) aufweist, und wobei das erste Anschlagelement (4₅) aus einem vorstehenden Teil besteht, der auf der Außenfläche des ersten Verbindungselements einen Höcker bildet, und
- der Höcker im Inneren der Vertiefung (4₇) zurückgehalten werden kann, indem ein leichtes Winkelausschlagen vorzugsweise kleiner oder gleich 5° in bezug zu einer vertikalen axialen Ebene gestattet wird,
- die Verformung der Lasche derart ist, daß der Höcker komplett aus der Vertiefung freigegeben werden kann, um ein seitliches Kippen der Aufnahme zu erlauben, das das Auskippen des Gegenstands gestattet, wenn die Aufnahme mit einer Auswurfvorrichtung zusammenwirkt.

9. Vorrichtung nach einem der Ansprüche 1 bis 8, **dadurch gekennzeichnet, daß** sie zweite Anschlagelemente (5₃-5₄, 5₅-5₆) aufweist, die sich auf dem Niveau der Anlenkelemente um die erste und zweite Drehachse (5₁, 5₂) befinden, wobei die zweiten Anschlagelemente (5₃, 5₄) die Drehungen um einen Winkel α kleiner oder gleich 10°, vorzugsweise 5° in bezug auf die Horizontale der Verbindungsarme und jeweils der Aufnahme beschränken können.

10. Vorrichtung nach einem der Ansprüche 1 bis 9, **dadurch gekennzeichnet, daß** die Aufnahme mindestens vier Auflageelemente (2₄, 2₅, 2₆, 2₇) aufweist, die zwei vordere rechte Auflageelemente (2₄) und vordere linke Auflageelemente (2₅) und zwei rechte hintere Auflageelemente (2₆) und hintere linke Auflageelemente (2₇) aufweisen, wobei die Auflageelemente symmetrisch zu einer vertikalen axialen Ebene (P) der Aufnahme in die Längsrichtung (XX') angeordnet sind, wobei die Auflageelemente zu ihrer Basis mit einer gleichen Auflageebene (P-2) tangierend sind, und wobei der Schnittpunkt (2₁₄) der Geraden, die die vorderen rechten Auflageelemente (2₄) und vorderen linken Auflageelemente (2₅) mit den linken hinteren Auflageelementen (2₇) und jeweils rechten hinteren Auflageelementen (2₆) verbinden, auf einer gleichen Geraden (ZZ') senkrecht zu einer gleichen Auflageebene (P2) liegt, wobei die senkrechte Gerade (ZZ') senkrecht zu der Aufnahmeebene (P2) durch den Schwerpunkt (2₈) der Aufnahme verläuft.

11. Vorrichtung nach Anspruch 10, **dadurch gekennzeichnet, daß** die vorderen Auflageelemente (2₄, 2₅) seitlich in bezug auf die hinteren Auflageelemente (2₆, 2₇) versetzt sind, wobei vorzugsweise die vorderen Auflageelemente (2₄, 2₅) einander näher sind als die hinteren Auflageelemente (2₆, 2₇).

12. Vorrichtung nach einem der Ansprüche 1 bis 11, **dadurch gekennzeichnet, daß** die Aufnahme auf der Unterseite oder seitlich zweite Auflagen oder Auswurfkufen (2₉, 2₁₀) aufweist, die mit einem beweglichen Element (7₁) der Auswurfvorrichtung zusammenwirken können, wobei das bewegliche Element einen vertikalen Schub auf das zweite Auflageelement zu der Auswurfkufe ausüben kann, wobei das zweite Auflageelement vor der ersten Drehachse liegt.

13. Vorrichtung nach einem der Ansprüche 1 bis 12, **dadurch gekennzeichnet, daß** die Aufnahmen, der Bügel und die Verbindungsmittel ganz aus Kunststoff hergestellt sind.

14. Gewichtskalibriervorrichtung eines Gegenstands (1), wie zum Beispiel einer Frucht oder eines Gemüses, umfassend mehrere Auflagevorrichtungen (1) nach einem der Ansprüche 1 bis 13, die an einem Endloskettenförderer (1₃) befestigt sind, mindestens eine Wiegevorrichtung (6) in einer Wiegezone (6₁) und mindestens eine Auswurfvorrichtung (7) in einer Auswurfzone (7₁) eines Gegenstands aus der Aufnahme, nach dem seitlichen Kippen der Aufnahme.

15. Gewichtskalibriervorrichtung nach Anspruch 14, **dadurch gekennzeichnet, daß** die Wiegevorrichtung Folgendes aufweist:
- mindestens eine Wiegeplatte (6₂) auf jeder Seite des Förderers (1₁), wobei die Platten derart angeordnet sind, daß mindestens vier vordere Auflageelemente (2₄, 2₅) und hintere Auflageelemente (2₆, 2₇) einer Aufnahme gleichzeitig auf jeweils den 4 vorderen Zonen (6₃) und hinteren Zonen (6₄), die den Wiegeplatten entsprechen, aufliegen, ohne daß die Auflageelemente der vorhergehenden und darauf folgenden Aufnahme auf den gleichen Wiegeplatten ruhen, und
- Rampen (6₆), die zu den Wiegeplatten führen, zu beiden Seiten der Kette in der Wiegezone, wobei die Rampen anfänglich geneigt und dann horizontal sind, so daß die Aufnahme, die in Auflage auf den Rampen gleitet, in Verschiebung angehoben wird, um in Hub allein durch den Verbindungsarm in im wesentlichen horizontaler Position gehalten zu werden, wenn er auf den Wiegeplatten aufliegt.

16. Gewichtskalibriervorrichtung nach Anspruch 15, **dadurch gekennzeichnet, daß** jede Wiegeplatte (6₂) eine vordere Zone (6₃) aufweist, die seitlich in bezug auf die hintere Zone (6₄) versetzt ist, und daß jede Aufnahme mindestens 2 vordere Auflageelemente (2₄, 2₅) aufweist, die ebenfalls seitlich in bezug auf mindestens 2 hintere Auflageelemente (2₆, 2₇) versetzt sind, wobei die Wiegeplatten (6₂) länger als eine Aufnahme und derart angeordnet sind, daß die mindestens vier vorderen Auflageelemente (2₄, 2₅) und hinteren Auflageelemente (2₆, 2₇) einer Aufnahme gleichzeitig auf jeweils den entsprechenden vier vorderen Zonen (6₃) und entsprechenden hinteren Zonen der Wiegeplatten aufliegen, ohne daß die vorderen Auflageelemente (2₄, 2₅) und hinteren Auflageelemente (2₆, 2₇) der vorhergehenden und darauf folgenden Aufnahme auf den gleichen Wiegeplatten ruhen.

17. Vorrichtung nach einem der Ansprüche 14 bis 16, **dadurch gekennzeichnet, daß** die Auswurfvorrichtung ein bewegliches Element (7₂) aufweist, das von unten nach oben schwenken kann, das von einem Elektromagneten in Abhängigkeit von Informationen, die von der Wiegevorrichtung übermittelt werden, gesteuert wird, um einen senkrechten Schub auf das dritte Auflageelement oder die dritte Auswurfkufe (2₉,2₁₀) zu bewirken und das Drehen der Aufnahme um die dritte Achse sowie das Auskippen des Gegenstands in der Aufnahmezone zu verursachen.
